# EUROPEAN PATENT SPECIFICATION

(11) **EP 0 717 487 B1**
(45) Date of publication and mention of the grant of the patent: **28.10.1998**
(21) Application number: 95203386.8
(22) Date of filing: 07.12.1995
(51) Int. Cl.: H02J 3/14

(54) **An electrical system with control of the power demand**
Elektrisches System mit Steuerung des Leistungsbedarfs
Système électrique avec commande de la demande en puissance

(30) Priority: 13.12.1994 IT MI942506
(43) Date of publication of application: 19.06.1996
(73) Proprietor: BTICINO S.P.A., 20154 Milano (IT)
(72) Inventor: Novati, Daniele, I-21100 Varese (IT); Santini, Ernesto, I-28060 Sozzago (Novara) (IT)
(74) Representative: Maggioni, Claudio

(56) References cited:
- EP-A- 0 015 666
- EP-A- 0 250 320
- EP-A- 0 359 178
- US-A- 4 264 960

## Description

The present invention relates to electrical-energy supply systems with control of the power demand and, more particularly, to a system as defined in the preamble to Claim 1. A system having these features is known from EP-A-0 250 320 (see also US-A-4 888 495).

The requirements for automatic control of the power consumed by a domestic electrical system or the like are, essentially:
- on the part of the user, to prevent an excessive energy demand from causing the limiting device provided by the supplier from operating, thus putting the entire system out of use, and
- on the part of the supplier, to limit the maximum power consumed by the system during periods of greater demand for electrical-energy and to promote the consumption of electrical energy during periods of lesser demand.

To satisfy these requirements, devices have been proposed which can control the power consumed by an electrical system in dependence on various parameters, amongst which are the instantaneous power or current consumed, the power available, and the "priority" of the loads, that is, the relative importance of one load in comparison with another, with regard to continuity of service.

A known device is constituted essentially by a main relay having its excitation coil in series with a load which is considered to have priority, that is, which is to be supplied in any case, possibly at the expense of other loads, and a normally-closed contact in the supply circuit of a second relay, the normally-closed contacts of which permit the supply of other loads which are considered secondary. When the current in the main load exceeds a predetermined threshold level, the contact of the main relay opens instantaneously, thus de-activating the second relay and the secondary loads controlled thereby, so that all of the power available remains available to the main load. Owing to its structure, this device provides for only two priority levels and does not enable the priorities of the loads to be changed easily since they are determined at the stage when the system is wired; for example, a case could be considered, in which a priority load has to be moved to a location in which there are only sockets for secondary loads.

There are also known control systems in which the sockets of the system are activated and de-activated by a control signal emitted by a central electronic control unit on a data-transmission line to which the sockets are connected. The central unit contains data on the maximum power which can be supplied to the system, on the instantaneous power consumed, and on the priority levels of the individual sockets, the central unit de-activating the sockets selectively, starting with those having the lowest priority levels, if the power consumed exceeds a predetermined value near to the maximum power, and reactivating them if the power consumed falls below this value. This system is not easy to use because it requires quite complex programming of the central unit.

A system which is similar to that described briefly above and in which the transmission of the data and of the commands between the central control unit and the electrical sockets is achieved with the use of the 230V distribution network by means of a carried wave system has also been proposed. Although this system offers advantages at the installation stage in comparison with systems with a signal-transmission line separate from the 230V network, it has the disadvantage of requiring expensive and bulky components in the circuit for modulating and demodulating the signals, that is, in contrast with the dimensional requirements of systems which provide for recessed sockets. Another disadvantage is poor reliability due to the possibility of the 230V network having very low impedances which may even prevent correct transmission of the signals.

The main object of the present invention is to provide an electrical-energy supply system with automatic control of the power demand in which the priorities of the loads can be set and changed easily.

This object is achieved, according to the invention, by a system as defined and characterized in the first of the claims which follow the present description.

The invention will be understood better from the following detailed description of an embodiment thereof provided by way of example and therefore in no way limiting, and given with reference to the appended drawings, in which:
Figure 1 shows schematically a system according to the invention, and
Figure 2 is a block diagram of an electronic control unit of an electrical socket.

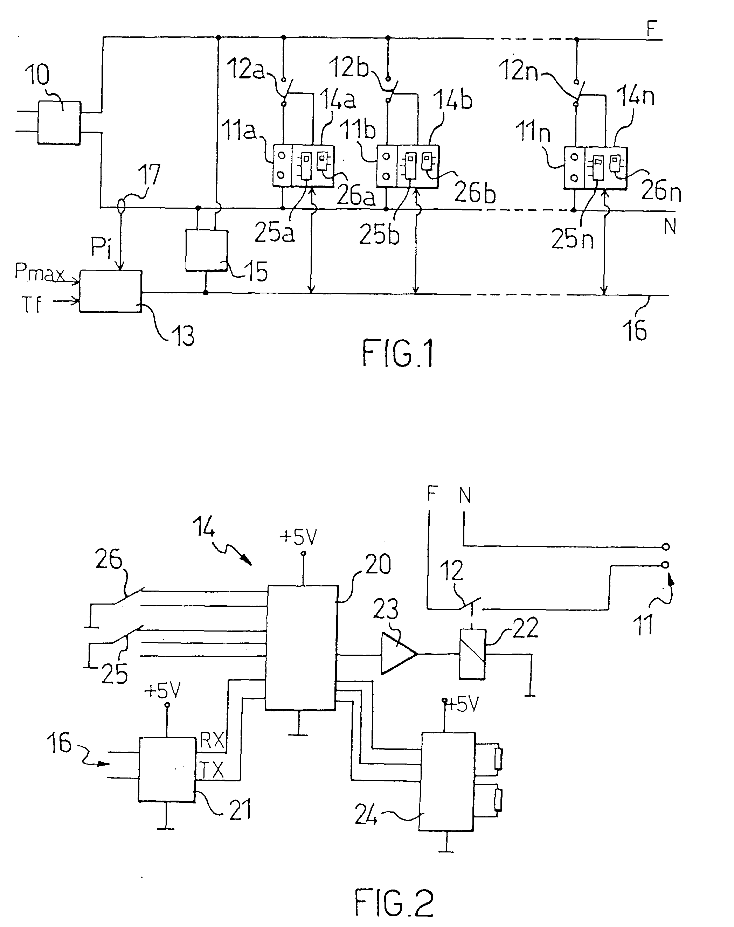

With reference, in particular, to Figure 1, the system according to the invention comprises a single-phase supply line having a neutral wire N and a phase wire F connected to a control board, generally indicated 10, which is connected to the electrical-energy supply mains. The control board 10, of known type, contains a meter, a main cut-out switch and overload-protection switches, not shown.

Various sockets, indicated 11a, 11b, ... 11n, are connected to the line, between the wires N and F, by the same number of connection means, shown as switches 12a, 12b, ... 12n.

The system also comprises a central electronic control unit 13, a plurality of peripheral electronic control units 14a, 14b, ... 14n, each of which, in this embodiment, is associated with a socket and has respective priority level selectors 25a, 25b, ... 25n and tariff-data selectors 26a, 26b, ... 26n, a low-voltage direct-current supply 15, and data-transmission means constituted by a double-wire line, shown for simplicity by a single line 16 in the drawing, to which the peripheral units 14a, 14b, ... 14n, the central unit 13 and the supply 15 are connected.

The central unit 13 receives input data relating to the maximum power Pmax which can be supplied to the system on the basis of the contract between the supplier and the user, and data relating to the cost of the electrical energy, that is the tariffs in force Tf. These data may be supplied by the supplier on the network by carried-wave transmission and, in this case, the central unit will be connected to the line F, N by means of a suitable decoder, or the data may be set manually, for example, by means of a suitable selector on the central unit 13. The maximum current, rather than the maximum power, may be set as the quantity representative of the maximum power which can be supplied to the system.

The system also comprises a device, indicated 17, for measuring an electrical quantity, for example, the current, indicative of the instantaneous power consumed, the device being connected to the central unit 13 in order to supply it with a corresponding signal. This device may also be the same device which is normally associated with the meter included in the control board 10.

The supply 15 draws energy from the supply line F, N and serves for supplying the electronic circuits of the various peripheral units 14a, 14b, ... 14n with the direct-current voltage necessary for their operation.

As shown in Figure 2, each peripheral unit 14 comprises data-processing means in the form of a micro-controller 20. This is connected to the line 16 by means of a modem 21 and to the switch 12 of a socket 11 by means of a relay coil 22 piloted by a power amplifier 23. Upstream of the modem 21 there is a voltage regulator, not shown, for supplying a stabilized low-voltage direct-current supply (+5V) for the circuits of the unit 14. A configuration circuit 24 is connected to the micro-controller 20 for supplying it with address data which identify the peripheral unit, two selectors 25 and 26 also being connected to the micro-controller 20 for supplying it with data relating, respectively, to the priority level (in the embodiment shown one of three possible levels) to be assigned to the unit 14, and hence to the associated socket 11, and tariff data (in this case one of two possible data) which set the conditions for the enabling of the unit, that is, conditions which allow it to be enabled only during periods in which the corresponding tariffs are in force.

The configuration circuit 24 is a device which is accessible to the installer of the system in order to set an address as a combination of logic states recognizable by the micro-controller 20. In practice, the setting can be effected by connecting resistors of predetermined resistance to the circuit 24.

The selectors 25 and 26 can be operated by the user and are disposed near the associated socket, as in the embodiment shown in Figure 1, or even in a position which is remote from the socket but more easily accessible. In this case, the peripheral unit will also be located in this position, together with the respective selectors. As already stated, two or more sockets may even be associated with the same peripheral unit; in this case, the coil 22 will control the activation or de-activation of all the associated sockets at the same time.

The micro-controller 20 sends signals containing address, priority-level and tariff data on the transmission line by means of the modem 21 and receives signals containing address and activation or de-activation data by means of the same modem 21.

The central control unit 13 comprises, essentially, a micro-controller which processes the input data, that is, the maximum power Pmax, or the maximum current, the tariff in force Tf, the instantaneous power consumed Pi, or the instantaneous current, the addresses of the peripheral units and the respective priority-level and tariff data, according to a predetermined algorithm, and outputs on the data-transmission line 16 signals containing address and activation or de-activation data for activating or de-activating the sockets so as always to supply the maximum power demanded by the system as far as the maximum power set allows. For example, if the power set, which may be that available by contract or a lower power, is lower than that which the user is demanding, the central control unit adapts the power demanded to that available by disconnecting loads, starting with those with the lowest priority and so on with increasing priority, seeking to keep in service the loads which the user has identified as most important. As stated, the user can also set a certain consumer, and hence a certain socket, to be supplied only when a certain tariff is in force by suitable operation of the tariff selector of the peripheral unit with which the socket is associated.

According to a variant of the invention which is useful if the electrical-energy supplier charges different tariffs for different time bands (for example, a full day-time tariff and a reduced night-time tariff), instead of the tariff-data selectors, time-band selectors are provided, that is, time programming devices for preventing the activation of the socket or sockets associated with the peripheral unit during predetermined time intervals defined by the time bands. In this case, naturally, the tariff data can be omitted from the signal output by the central unit on the transmission line.

The object of the invention is thus fully achieved. In fact, multi-level priorities which, in the embodiment described, are selected together with the tariff data, can easily be defined and modified by the user according to his own needs. In addition to these advantages there are those relating to the centralization of the control and power-measurement functions, which are practicality and cheapness. Moreover, since the data are transmitted on a line separate from the electrical-energy supply line, maximum reliability of the control of the system and maximum economy are achieved, particularly in the case of newly constructed installations. Another advantage of the invention is the fact that the addresses of the peripheral units can be modified at will, enabling rapid restructuring of the system.

Although a single embodiment of the invention has been described and illustrated, clearly many variants and modifications are possible within the scope of the invention as set out in the Claims. For example, electronic switches could be used instead of the mechanical switches or contacts 12 which, with the coils 22, constitute relays; instead of three priority levels and two tariff data to be selected, it would be possible to provide for a larger number if necessary; naturally, it would also be possible to provide for a selector position in which the peripheral unit is excluded from the control of the central unit; moreover, devices for measuring electrical quantities, such as the current consumed locally by the load connected to the associated socket, could also be included in the peripheral units and data for indicating overload conditions etc. could be included in the signal transmitted to the central unit.

## Claims

1. An electrical-energy supply system with control of the power demand, comprising:
- a supply line (F, N);
- a plurality of electrical sockets (11a, 11b, ... 11n);
- means (12a, 12b, ... 12n) for connecting the electrical sockets to the line (F, N);
- a central electronic control unit (13);
- a plurality of peripheral electronic control units (14a, 14b, ... 14n), each associated with at least one of the electrical sockets (11a, 11b, ... 11n);
- a double-wire data-transmission line (16) between the central unit and the peripheral units;
- means (17) for measuring an electrical quantity indicative of the instantaneous power (Pi) consumed from the supply line (F,N); and
- means for setting, in the central unit (13), data defining the maximum power (Pmax) which can be consumed by the system,
wherein each peripheral unit (14) comprises:
- selector means (25) for assigning a priority level to the unit;
- means (21) for receiving signals present on the data-transmission line (16); and
- data-processing means (20) connected to the selector and receiving means, as well as to the connection means (12) of the associated socket or sockets, for activating or de-activating the connection means in response to an activation or de-activation signal received by the receiving means,
and wherein the central unit (13) comprises:
- means for outputting signals on the data-transmission line (16); and
- data-processing means which are connected to the means for measuring an electrical quantity indicative of the instantaneous power (Pi), to the means for setting data defining the maximum power (Pmax), and to the means for outputting signals, and which can produce signals containing activation or de-activation data for selectively and automatically activating or de-activating the sockets (11) on the basis of the criterion of supplying to the system at any moment the maximum power demanded as far as the maximum power set allows,
characterized in that :
- each peripheral unit (14) further comprises configuration means (24) for assigning an address to the unit;
- each peripheral unit (14) further comprises means (21) for outputting on the data-transmission line (16) signals containing address and priority-level data to be applied;
- said data-processing means (20) of each peripheral unit (14) are also connected to the configuration and output means and activate or de-activate the connection means in response to a said activation or de-activation signal received by the receiving means and containing the address of the peripheral unit;
- the central unit (13) further comprises means for receiving signals from the data-transmission line (16),
- said data-processing means of said central unit (13) are also connected to the means for receiving signals, and said signals it can produce contain also address data and selectively and automatically activate or de-activate the sockets (11) also on the basis of the address data and of the priority-level data received.

2. A system according to Claim 1, comprising a direct-current electrical-energy supply (15) connected to the double-wire data-transmission line (16) for supplying the electronic circuits of the peripheral units (14a, 14b, ... 14n).

3. A system according to Claim 1 or Claim 2, in which at least one of the peripheral units (14) comprises time-band selector means for preventing the activation of the associated socket or sockets (11) during predetermined time intervals.

4. A system according to Claim 1 or Claim 2 comprising means for setting, in the central unit, tariff data relating to the cost of the electrical energy, in which the signals produced by the data-processing means of the central unit (13) include such tariff data, and in which at least one of the peripheral units (14) comprises modifiable tariff-data selector means (26) which can enable the unit only if the signal received by the receiving means contains the tariff data selected by the selector means (26).

5. A system according to any one of the preceding claims, in which the means for measuring an electrical quantity indicative of the instantaneous power consumed (Pi) are included in a control board of the system.

6. A system according to any one of the preceding claims, in which the means for setting data defining the maximum power (Pmax) which can be consumed by the system comprise signals transmitted on the supply line (F, N).

7. A system according to any one of the preceding Claims 4 to 6, in which the means for setting tariff data in the central unit (13) comprise signals transmitted on the supply line (F, N).

## Patentansprüche

1. Ein elektrisches Energieversorgungssystem mit einer Steuerung der Leistungsnachfrage, mit folgenden Merkmalen:
- einer Versorgungsleitung (F, N);
- einer Mehrzahl von elektrischen Sockeln (11a, 11b, ..., 11n);
- einer Einrichtung (12a, 12b, ..., 12n) zum Verbinden der elektrischen Sockel mit der Leitung (F, N) ;
- einer zentralen elektronischen Steuereinheit (13);
- einer Mehrzahl von peripheren elektronischen Steuereinheiten (14a, 14b, ..., 14n), wobei jede zumindest einem der elektrischen Sockel (11a, 11b, ..., 11n) zugeordnet ist;
- einer Doppeldraht-Datenübertragungsleitung (16) zwischen der Zentraleinheit und den peripheren Einheiten;
- einer Einrichtung (17) zum Messen einer elektrischen Größe, die die Augenblicksleistung (Pi), die von der Versorgungsleitung (F, N) verbraucht wird, anzeigt; und
- einer Einrichtung zum Einstellen von Daten in der Zentraleinheit (13), die die Maximalleistung (Pmax) definieren, die von dem System verbraucht werden kann,
wobei jede periphere Einheit (14) folgende Merkmale aufweist:
- eine Auswahleinrichtung (25) zum Zuweisen eines Prioritätspegels zu der Einheit;
- eine Einrichtung (21) zum Empfangen von Signalen, die auf der Datenübertragungsleitung (16) vorhanden sind; und
- eine Datenverarbeitungseinrichtung (20), die mit der Auswahl- und Empfangseinrichtung sowie mit der Verbindungseinrichtung (12) des zugeordneten Sockels oder der zugeordneten Sockel verbunden ist, zum Aktivieren oder Deaktivieren der Verbindungseinrichtung als Reaktion auf ein Aktivierungs- oder Deaktivierungssignal, das von der Empfangseinrichtung empfangen wird,
und bei dem die zentrale Einheit (13) folgende Merkmale aufweist:
- eine Einrichtung zum Ausgeben von Signalen auf der Datenübertragungsleitung (16); und
- eine Datenverarbeitungseinrichtung, die mit der Einrichtung zum Messen einer elektrischen Größe, die die Augenblicksleistung (Pi) anzeigt, mit der Einrichtung zum Einstellen von Daten, die die Maximalleistung (Pmax) definieren, und mit der Einrichtung zum Ausgeben von Signalen verbunden ist, und die Signale erzeugen kann, die Aktivierungs- oder De-aktivierungsdaten zum selektiven und automatischen Aktivieren oder Deaktivieren der Sockel (11) enthalten, auf der Basis des Kriteriums der Versorgung in des Systems zu einem beliebigen Zeitpunkt mit der geforderten Maximalleistung solange es die Maximalleistungseinstellung zuläßt,
dadurch gekennzeichnet, daß:
- jede periphere Einheit (14) ferner eine Konfigurationseinrichtung (24) zum Zuweisen einer Adresse zu der Einheit umfaßt;
- jede periphere Einheit (14) ferner eine Einrichtung (21) zum Ausgeben von Signalen, die Adressen- und anzuwendende Prioritätspegeldaten enthalten, auf der Datenübertragungsleitung (16) aufweist;
- wobei die Datenverarbeitungseinrichtung (20) jeder peripheren Einheit (14) ebenfalls mit der Konfigurations- und Ausgabeeinrichtung verbunden ist und die Verbindungseinrichtung ansprechend auf ein Aktivierungs- oder Deaktivierungssignal aktiviert oder deaktiviert, das von der Empfangseinrichtung empfangen wird und die Adresse der peripheren Einheit enthält;
- die zentrale Einheit (13) ferner eine Einrichtung zum Empfangen von Signalen von der Datenübertragungsleitung (16) umfaßt,
- die Datenverarbeitungseinrichtung der zentralen Einheit (13) ebenfalls mit der Einrichtung zum Empfangen von Signalen verbunden ist, wobei die Signale, die dieselbe erzeugen kann, ebenfalls Adressendaten enthalten und die Sockel (11) ferner auf der Basis der Adressendaten und der empfangenen Prioritätspegeldaten selektiv und automatisch aktivieren oder deaktivieren.

2. Ein System gemäß Anspruch 1, das eine Gleichstromversorgung (15) für elektrische Energie umfaßt, die mit der Doppeldraht-Datenübertragungsleitung (16) verbunden ist, um die elektronischen Schaltungen der peripheren Einheiten (14a, 14b, ..., 14n) zu versorgen.

3. Ein System gemäß Anspruch 1 oder Anspruch 2, bei dem zumindest eine der peripheren Einheiten (14) eine Zeitbandauswahleinrichtung zum Verhindern der Aktivierung des zugeordneten Sockels oder der zugeordneten Sockel (11) während vorbestimmter Zeitintervalle umfaßt.

4. Ein System gemäß Anspruch 1 oder Anspruch 2, das eine Einrichtung zum Einstellen von Tarifdaten, die sich auf die Kosten der elektrischen Energie beziehen, in der Zentraleinheit umfaßt, wobei die Signale, die von der Datenverarbeitungseinrichtung der zentralen Einheit (13) erzeugt werden, solche Tarifdaten umfassen, und wobei zumindest eine der peripheren Einheiten (14) eine modifizierbare Tarifdatenauswahleinrichtung (26) umfaßt, die die Einheit nur dann freigeben kann, wenn das Signal, das von der Empfangseinrichtung empfangen wird, die Tarifdaten enthält, die von der Auswahleinrichtung (26) ausgewählt werden.

5. Ein System gemäß einem der vorhergehenden Ansprüche, bei dem die Einrichtung zum Messen einer elektrischen Größe, die die Augenblicksleistung anzeigt, die verbraucht wird (Pi), in einer Steuerplatine des Systems enthalten ist.

6. Ein System gemäß einem der vorhergehenden Ansprüche, bei dem die Einrichtung zum Einstellen von Daten, die die Maximalleistung (Pmax) definieren, die von dem System verbraucht werden kann, Signale umfaßt, die auf der Versorgungsleitung (F, N) übertragen werden.

7. Ein System gemäß einem der vorhergehenden Ansprüche 4 bis 6, bei dem die Einrichtung zum Einstellen von Tarifdaten in der zentralen Einheit (13) Signale umfaßt, die auf der Versorgungsleitung (F, N) übertragen werden.

## Revendications

1. Système d'alimentation en énergie électrique avec régulation de la puissance appelée, comportant :
- une ligne d'alimentation (F, N) ;
- plusieurs prises électriques (11a, 11b, ... 11n) ;
- des moyens (12a, 12b, ... 12n) pour connecter les prises électriques à la ligne (F, N) ;
- une unité centrale de commande électronique (13) ;
- plusieurs unités périphériques de commande électronique (14a, 14b, ... 14n), associées chacune à au moins l'une des prises électriques (11a, 11b, ... 11n) ;
- une ligne (16) de transmission de données à deux fils entre l'unité centrale et les unités périphériques ;
- des moyens (17) destinés à mesurer une quantité électrique représentative de la puissance instantanée (Pi) consommée à partir de la ligne d'alimentation (F, N) ; et
- des moyens destinés à établir, dans l'unité centrale (13), des données définissant la puissance maximale (Pmax) qui peut être consommée par le sytème,
dans lequel chaque unité périphérique (14) comporte :
- des moyens à sélecteur (25) destinés à affecter un niveau de priorité à l'unité ;
- des moyens (21) destinés à recevoir des signaux présents sur la ligne (16) de transmission de données ; et
- des moyens (20) de traitement de données connectés aux moyens à sélecteur et de réception, ainsi qu'aux moyens (12) de connexion de la prise ou des prises associées, pour activer ou désactiver les moyens de connexion en réponse à un signal d'activation ou de désactivation reçu par le moyen de réception,
et dans lequel l'unité centrale (13) comporte :
- des moyens pour délivrer en sortie des signaux sur la ligne (16) de transmission de données ; et
- des moyens de traitement de données qui sont connectés aux moyens pour mesurer une quantité électrique représentative de la puissance instantanée (Pi), aux moyens pour établir des données définissant la puissance maximale (Pmax), et aux moyens pour délivrer en sortie des signaux, et qui peuvent produire des signaux contenant des données d'activation ou de désactivation afin d'activer ou désactiver sélectivement et automatiquement les prises (11) sur la base du critère de la fourniture au système, à n'importe quel moment, de la puissance maximale appelée dans la mesure où la puissance maximale établie le permet,
caractérisé en ce que :
- chaque unité périphérique (14) comporte en outre des moyens (24) de configuration destinés à affecter une adresse à l'unité ;
- chaque unité périphérique (14) comporte en outre des moyens (21) pour délivrer en sortie sur la ligne (16) de transmission de données des signaux contenant des données d'adresse et de niveau de priorité devant être appliqués ;
- lesdits moyens (20) de traitement de données de chaque unité périphérique (14) sont également connectés aux moyens de configuration et de sortie et activent ou désactivent les moyens de connexion en réponse à un signal d'activation ou de désactivation reçu par les moyens de réception et contenant l'adresse de l'unité périphérique ;
- l'unité centrale (13) comporte en outre des moyens destinés à recevoir des signaux de la ligne (16) de transmission de données,
- lesdits moyens de traitement de données de ladite unité centrale (13) sont également connectés aux moyens destinés à recevoir des signaux, et lesdits signaux qu'il peut produire contiennent aussi des données d'adresse et activent ou désactivent sélectivement et automatiquement les prises (11) également sur la base des données d'adresse et des données de niveau de priorité reçues.

2. Système selon la revendication 1, comportant une alimentation (15) en énergie électrique à courant continu connectée à la ligne (16) de transmission de données à deux fils pour l'alimentation des circuits électroniques des unités périphériques (14a, 14b, ... 14n).

3. Système selon la revendication 1 ou la revendication 2, dans lequel au moins l'une des unités périphériques (14) comporte des moyens sélecteurs de tranche horaire destiné à empêcher l'activation de la prise ou des prises associées (11) pendant des intervalles de temps prédéterminés.

4. Système selon la revendication 1 ou la revendication 2, comportant des moyens destinés à établir, dans l'unité centrale, des données de tarification concernant le coût de l'énergie électrique, dans lequel les signaux produits par les moyens de traitement de données de l'unité centrale (13) comprennent de telles données de tarification, et dans lequel au moins l'une des unités périphériques (14) comporte des moyens sélecteurs modifiables (26) de données de tarification qui peuvent valider l'unité uniquement si le signal reçu par les moyens de réception contient les données de tarification sélectionnées par les moyens sélecteurs (26).

5. Système selon l'une quelconque des revendications précédentes, dans lequel les moyens destinés à mesurer une quantité électrique représentative de la puissance instantanée consommée (Pi) sont incorporés dans une plaquette de commande du système.

6. Système selon l'une quelconque des revendications précédentes, dans lequel les moyens destinés à établir des données définissant la puissance maximale (Pmax) qui peut être consommée par le système comprennent des signaux transmis sur la ligne d'alimentation (F, N).

7. Système selon l'une quelconque des revendications précédentes 4 à 6, dans lequel les moyens destinés à établir des données de tarification dans l'unité centrale (13) comprennent des signaux transmis sur la ligne d'alimentation (F, N).
